(19) **Europäisches Patentamt European Patent Office Office européen des brevets**

(11) **EP 4 460 714 B1**

(12) **EUROPEAN PATENT SPECIFICATION**

(45) Date of publication and mention of the grant of the patent:
**25.02.2026 Bulletin 2026/09**

(21) Application number: **22700563.4**

(22) Date of filing: **04.01.2022**

(51) International Patent Classification (IPC):
**G01S 13/34** (2006.01)     **G01S 13/60** (2006.01)
**G01S 13/88** (2006.01)

(52) Cooperative Patent Classification (CPC):
**G01S 13/605; G01S 13/34; G01S 13/885**

(86) International application number:
**PCT/EP2022/050064**

(87) International publication number:
**WO 2023/131394 (13.07.2023 Gazette 2023/28)**

(54) **RELIABLY DETERMINING SPEED OVER GROUND OF A HEAVY-DUTY VEHICLE**

ZUVERLÄSSIGE BESTIMMUNG DER GESCHWINDIGKEIT ÜBER DEM BODEN EINES SCHWERLASTFAHRZEUGS

DÉTERMINATION FIABLE DE LA VITESSE AU SOL D'UN VÉHICULE UTILITAIRE LOURD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.11.2024 Bulletin 2024/46**

(73) Proprietor: **VOLVO TRUCK CORPORATION**
**405 08 Göteborg (SE)**

(72) Inventors:
• **RYDSTRÖM, Mats**
  **427 39 Billdal (SE)**
• **LAINE, Leo**
  **438 94 Härryda (SE)**

(74) Representative: **Ström & Gulliksson AB**
**P.O. Box 4188**
**203 13 Malmö (SE)**

(56) References cited:
**KR-A- 20160 125 747     US-A1- 2005 116 854
US-A1- 2014 121 964     US-A1- 2015 005 993
US-A1- 2020 191 938**

## Description

TECHNICAL FIELD

The present disclosure relates to radar transceivers as well as to methods and control units for determining the speed over ground of a heavy-duty vehicle. The methods are particularly suitable for use in motion management of cargo transporting vehicles, such as trucks and semi-trailers. The invention can, however, also be applied in other types of heavy-duty vehicles, e.g., in construction equipment and in mining vehicles, as well as in cars.

BACKGROUND

Vehicles are becoming ever more complex in terms of mechanics, pneumatics, hydraulics, electronics, and software. A modern heavy-duty vehicle may comprise a wide range of different torque generating physical devices, such as combustion engines, electric machines, friction brakes, and electromagnetic brakes, which all need to be coordinated to bring about a desired vehicle motion. An important part of controlling the motion of a heavy-duty vehicle such as a truck or semi-trailer is to control wheel slip, i.e., the difference between the wheel speed of rotation and the speed over ground of the wheel, since excessive wheel slip complicates vehicle motion management and may also jeopardize vehicle safety.

The speed of rotation of a wheel may be determined reliably by various known wheel speed sensors, such as a Hall effect wheel speed sensor. However, the speed over ground is not always easily determined in a reliable manner and/or with sufficient accuracy. Global positioning system receivers can be used to determine vehicle speed over ground, but these suffer from performance degradation in some environments, such as environments without a clear view of the sky. Various forward looking sensors, such as radars, lidars, and vision-based sensors have also been proposed for determining vehicle speed over ground by observations of the ambient environment.

EP1739451 A1 discusses the use of radar transceivers directed towards the ground for determining vehicle speed over ground. Two principles are disclosed - one where a correlation between two spatially separated sensors is used and one where a Doppler shift in a received radar signal is processed to determine vehicle speed over ground.

US4366546 discusses the use of a Doppler radar to determine wheel slip of a vehicle.

In WO 2019/145272 A1, a radar sensor is used to determine vehicle speed over ground in case a global positioning system arranged for the same purpose fails.

US 2014/121964 A1 describes an approach for localization of a vehicle based on a comparison of acquired SPR images of a subsurface region along a vehicle track to SPR images previously acquired for a subsurface region that at least partially overlaps the subsurface region along the vehicle track.

US 2005/116854 A1 describes a radar sensor for motor vehicles, having a transmitter and receiver unit whose directional characteristic has multiple lobes, at least one of which is directed parallel to the roadway surface, and at least one other lobe being directed obliquely to the roadway surface.

US 2020/191938 A1 describes a vehicle motion direction approach where ground speed data is calculated for all targets within a radar's field of view and targets ground speed data is processed to determine further ground speed data.

US 2015/005993 A1 describes an approach for determining the speed of a vehicle, wherein at least one object present in the environment of the vehicle is detected, a relative speed of the detected object in relation to the vehicle is measured, and the speed of the vehicle is determined on the basis of the relative speed of the object.

However, despite the work done to-date, there is a continuing need for more reliable methods and sensors for determining vehicle speed over ground.

SUMMARY

It is an object of the present disclosure to provide techniques for determining vehicle speed over ground in a reliable manner and to alleviate or overcome at least some of the above-mentioned problems. This object is at least in part obtained by a method for determining speed over ground $v_x$ of a heavy-duty vehicle based on a ground-penetrating radar operation. The method comprises configuring a ground-penetrating radar transceiver with a main transmission lobe having a boresight direction pointing towards a road surface supporting the heavy-duty vehicle in a longitudinal direction of the heavy-duty vehicle. The method also comprises detecting a Doppler frequency associated with a target point at a distance below the road surface, and determining the speed over ground $v_x$ of the heavy-duty vehicle based on the detected Doppler frequency. This way the radial velocity of the target point will not be affected by disturbances on the road surface, such as water, snow, or other matter moving relative to the road surface. The detected Doppler frequency will be more stable and therefore also yield a more reliable estimate of the vehicle speed over ground. The boresight direction of the main transmission lobe is preferably configured at an angle relative to the road surface. This angle provides a more pronounced radial motion of the target point relative to the radar transceiver, which is an advantage.

According to some aspects, the method comprises configuring the radar transceiver as a frequency modulated continuous wave (FMCW) radar transceiver. An FMCW transceiver allows for efficient determination of Doppler frequency based on fast Fourier transform processing. The FMCW transceiver also allows for efficient array processing to suppress clutter arriving from directions other than a desired direction. Regards of radar technology, the main transmission lobe is preferably configured with an azimuth angular width below ten degrees, and preferably below five degrees, i.e., a relatively narrow main lobe in order to better distinguish radar echoes from the target point from other radar echoes from the ambient environment and from the vehicle itself.

The method may furthermore comprise detecting a distance from the radar transceiver to the road surface and determining the distance to the point below the road surface relative to the road surface distance. This way the distance to the point below the road surface can be efficiently compensated for vehicle motion, which is an advantage. Alternatively, the distance below the road surface can be configured as a pre-determined distance from the radar transceiver, which is a less complex implementation. The distance to the target point can also be compensated based on a current height over ground of the vehicle, such as a height over ground obtained from a suspension system sensor of the vehicle.

The method may furthermore comprise detecting the Doppler frequency associated with the target point also based on an angle of arrival of a received radar signal. This further suppresses radar echoes which do not originate from the target point under the road surface, which is an advantage.

The method optionally comprises detecting the Doppler frequency associated with the target point as an average or a weighted average Doppler frequency associated with a range of distances corresponding to a volume below the road surface. This may be an advantage in case scattering of radar energy under the road surface is diffuse.

There is also disclosed herein ground-penetrating radar transceivers, integrated wheel slip sensors, control units, computer programs, computer readable media, computer program products, and vehicles associated with the above discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

## BRIEF DESCRIPTION OF THE DRAWINGS

With reference to the appended drawings, below follows a more detailed description of embodiments of the invention cited as examples. In the drawings:

Figure 1    schematically illustrates a heavy-duty vehicle for cargo transport;

Figure 2    shows a system for vehicle motion management;

Figures 3A-B    are graphs of example relationships between wheel slip and tyre force;

Figure 4    schematically illustrates an example radar transceiver;

Figures 5A-B    schematically illustrate example range-Doppler graphs of radar detections;

Figure 6    schematically illustrates an integrated wheel slip sensor;

Figure 7    is a flow chart illustrating example methods;

Figure 8    schematically illustrates a sensor unit and/or a control unit; and

Figure 9    shows an example computer program product.

## DETAILED DESCRIPTION OF EXAMPLE EMBODIMENTS OF THE INVENTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

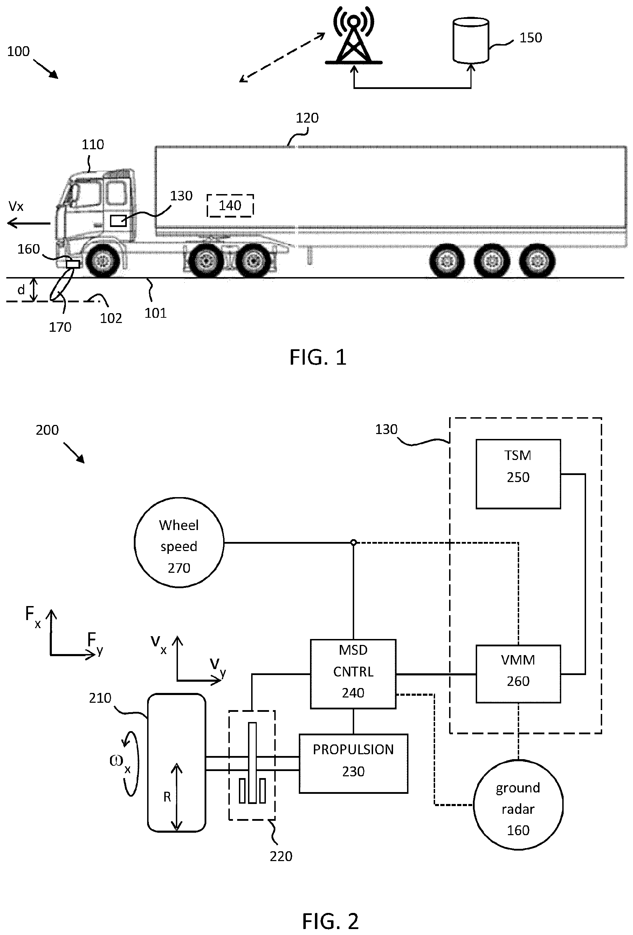

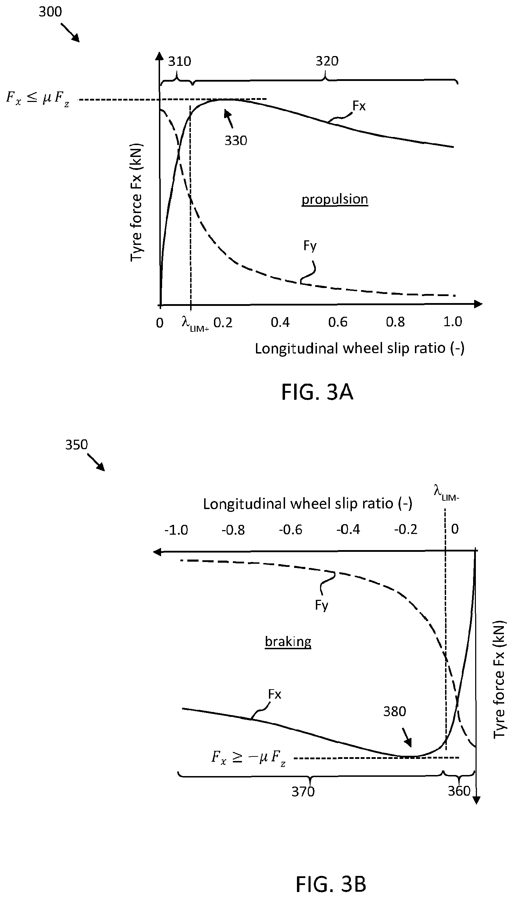

Figure 1 illustrates a heavy-duty vehicle 100. This particular example comprises a tractor unit 110 which is arranged to tow a trailer unit 120. The tractor 110 comprises a vehicle electronic control unit (ECU) 130 arranged to control various functions of the vehicle 100. For instance, the ECU may be arranged to perform a vehicle motion management (VMM) function comprising control of wheel slip, vehicle unit stability, and so on. The trailer unit 120 optionally also comprises an ECU 140, which then controls one or more functions on the trailer 120, such as a wheel slip of the wheels on the trailer 120. The ECU or ECUs may be communicatively coupled, e.g., via wireless link, to a remote server 150. This remote server may be arranged to perform configuration of the ECU, and to provide various forms of data to the ECU 130, such as providing data regarding the make and type of tyres mounted on the vehicle 100, and information related to a relationship between generated tyre force and wheel slip, i.e., an inverse tyre model, as will be discussed in more detail below in connection to Figures 3A and 3B.

The vehicle combination 100 may also comprise additional vehicle units, such as one or more dolly units and more than one trailer unit. The techniques disclosed herein are applicable to rigid trucks, and also to passenger cars, although the main benefit of the proposed technique is obtained when used with heavy-duty vehicle for cargo transport.

Propulsion of a heavy-duty vehicle like the vehicle 100 has traditionally been controlled using control loops based on torque requests issued from a central controller to the various motion support devices (MSD). However, the torque-based control loops of a heavy duty vehicle are normally associated with time constants on the order of 10 ms or so. In some scenarios this time constant reduces overall vehicle control bandwidth to a point where the startability and overall vehicle motion management of the heavy duty vehicle may be negatively affected, especially when road friction is uneven. To improve control during, e.g., vehicle launch, the control of propulsion and braking can instead be based on wheel slip requests (or, equivalently, wheel speed relative the vehicle speed) instead of on torque requests from the central controller. This means that the torque generating devices on the vehicle 100 are requested by the ECU 130 to maintain wheel slip at a target wheel slip value $\lambda_{target}$ which has been determined by the central controller in order to obtain a desired motion by the vehicle. For instance, if the target wheel slip is set at 0.1, then the wheel rotational velocity will be continuously set at a relative difference of 0.1 above the vehicle velocity so that the wheel will always be slipping by the configured amount. Notably, this control strategy is different compared to just imposing a wheel slip limit, and performing torque-based on control of the propulsion as long as the wheel slip stays below the configured wheel slip limit.

Longitudinal wheel slip $\lambda_x$ may, in accordance with SAE J670 (SAE Vehicle Dynamics Standards Committee January 24, 2008) be defined as

$$\lambda_x = \frac{R\omega_x - v_x}{max(|R\omega|, |v_x|)}$$

where R is an effective wheel radius in meters, $\omega_x$ is the angular velocity of the wheel, and $v_x$ is the longitudinal speed of the wheel (in the coordinate system of the wheel). Thus, $\lambda_x$ is bounded between -1 and 1 and quantifies how much the wheel is slipping with respect to the road surface. Wheel slip is, in essence, a speed difference measured between the wheel and the vehicle. Note that the longitudinal speed $v_x$ may need to be converted into the coordinate system of the wheel in case it is given in the coordinate system of the vehicle.

A wheel speed sensor can be arranged to measure the rotational velocity $\omega_x$ of the wheel. This sensor may, e.g., be based on the Hall effect in a known manner. Variable reluctance and magneto resistive wheel speed sensors are also known. Since wheel speed sensors are generally known they will not be discussed in more detail herein.

The radius R of the wheel is not always known exactly, but since it changes very slowly it can often be estimated over time. The radius R can, for instance, be determined by comparing travelled distance to the number of wheel rotations over the travelled distance in a known manner. The travelled distance can be determined by a global positioning system receiver, from the observation of landmarks, or by driving the vehicle along some form of calibration route or track having a known length. Thus, it remains to determine the longitudinal speed $v_x$ of the vehicle over ground in a reliable manner.

Towards this end the vehicle 100 comprises a radar transceiver 160 with a main transmission lobe 170 that is directed in the longitudinal direction of the vehicle 100 and which preferably is directed at an angle towards the ground 101. Thus, in a manner similar to the techniques described in, e.g., EP1739451 A1 the radar transceiver or some control circuit operatively connected to the radar transceiver 160 is able to determine the speed over ground of the vehicle 100. However, instead of determining relative velocity between the transceiver 160 and the road surface 101, the radar transceiver 160 is a ground-penetrating radar transceiver configured to determine the relative velocity between the transceiver 160 and a point on a plane 102 at a distance d under the road surface 101.

Objects on the road surface, such as running water, gravel, snow, and foreign objects, may affect the accuracy of a radar system measuring relative velocity between a radar transceiver and the road surface. However, by measuring velocity with respect to a point *under* the road surface, such disturbances can be avoided and a more reliable measurement of speed over ground can be obtained.

Figure 2 schematically illustrates functionality 200 for controlling an example wheel 210 by some example MSDs, here comprising a friction brake 220 (such as a disc brake or a drum brake) and a propulsion device 230 such as an electric machine (EM) or a combustion engine (CE). The friction brake 220 and the propulsion device 230 are examples of wheel torque generating devices, which may also be referred to as actuators and which can be controlled by one or more MSD control units 240.

According to an example vehicle control architecture, a traffic situation management (TSM) function 250 plans driving operations with a time horizon of, e.g., 1-10 seconds or so. This period corresponds to, e.g., the time it takes for the vehicle 100 to negotiate a curve. The vehicle maneuvers, planned and executed by the TSM, can be associated with acceleration profiles and curvature profiles which describe a desired vehicle velocity and turning for a given maneuver. The TSM continuously requests the desired acceleration profiles $a_{req}$ and curvature profiles $c_{req}$ from the VMM function 260 which performs force allocation to meet the requests from the TSM in a safe and robust manner, based at least in part based on capability reports received from the various MSD control units. Desired acceleration profiles and curvature profiles may optionally be determined based on input from a driver via a human machine interface of the heavy-duty vehicle via normal control input devices such as a steering wheel, accelerator pedal and brake pedal, although the techniques disclosed herein are just as applicable with autonomous or semi-autonomous vehicles. The exact methods used for determining the acceleration profiles and curvature profiles are not within scope of the present disclosure and will therefore not be discussed in more detail herein.

The control commands, i.e., the requests sent to the MSD controller 240 from the VMM function 260 may as discussed above comprise wheel slips $\lambda$ to be maintained by the respective MSDs instead of the customary torque requests. In order for the wheel slip requests to make sense, information about current vehicle speed $v_x$, wheel speed $\omega_x$ and wheel radius R are required, as discussed above. The wheel speed $\omega_x$ can be determined by some form of known wheel speed sensor 270, and the wheel radius R can be obtained as a predetermined parameter or estimated in real-time based on known methods. The vehicle speed $v_x$ is here determined by the VMM function 260 and sent to the MSD controller 240 and/or determined directly at the MSD controller 240 based on input data from the ground-penetrating radar transceiver 160. Note that the ground-penetrating radar transceiver 160 may also comprise processing circuitry for performing the necessary calculation to estimate vehicle speed over ground, and simply send the data to the VMM function 260 and/or to the MSD controller 240.

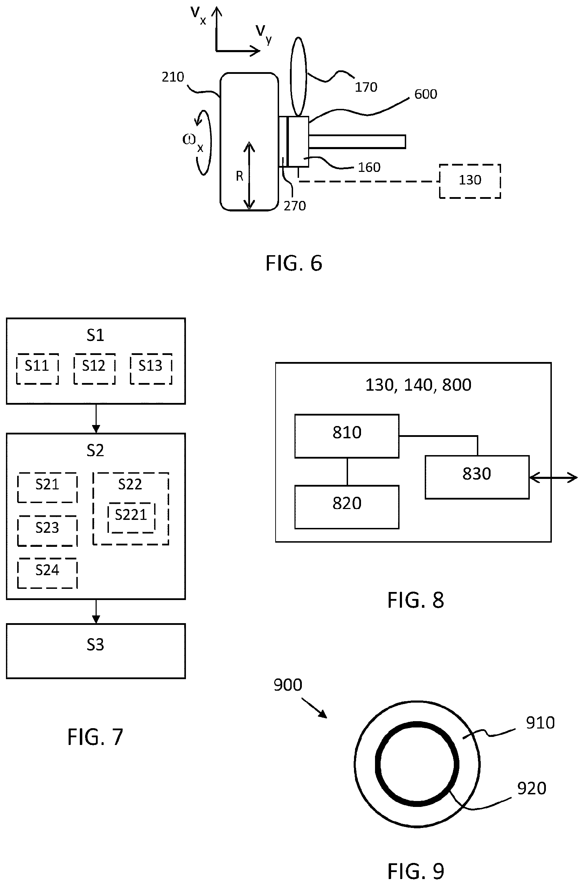

In a particularly advantageous implementation, the wheel speed sensor 270 and the ground-penetrating radar transceiver 160 are integrated into a wheel end unit. This integrated wheel end unit is then able to provide wheel slip data directly to the MSD controller 240 and/or directly to the VMM function 260. This type of integrated wheel slip sensor 600 will be discussed in more detail below in connection to Figure 6.

A tyre is subject to a longitudinal force $F_x$, a lateral force $F_y$, and a normal force $F_z$. The normal force $F_z$ is key to determining some important vehicle properties. For instance, the normal force to a considerable extent determines the achievable longitudinal tyre force $F_x$ by the wheel since, normally, $F_x \leq \mu F_z$, where $\mu$ is a friction coefficient associated with a road friction condition. The maximum available lateral force for a given lateral slip can be described by the so-called Magic Formula as described in "Tyre and vehicle dynamics", Elsevier Ltd. 2012, ISBN 978-0-08-097016-5, by Hans Pacejka. The wheel behavior in terms of wheel force generated in longitudinal direction (in the rolling direction) and/or lateral direction (orthogonal to the longitudinal direction) as function of wheel slip is discussed in "Tyre and vehicle dynamics", Elsevier Ltd. 2012, ISBN 978-0-08-097016-5, by Hans Pacejka. See, e.g., chapter 7 where the relationship between wheel slip and longitudinal force is discussed.

In order for a wheel (or tyre) to produce a wheel force, slip must occur. For smaller slip values the relationship between slip and generated force are approximately linear, where the proportionality constant is often denoted as the slip stiffness of the tyre. Figure 3A shows a graph 300 illustrating an example of achievable tyre forces $F_x$, $F_y$ as function of wheel slip during propulsion and Figure 3B illustrates the relationship 350 during braking. The longitudinal tyre force Fx shows an almost linear part 310, 360 for small wheel slips, followed by a part 320, 370 with more non-linear behavior for larger magnitude wheel slips. The obtainable lateral tyre force Fy decreases rapidly even at relatively small magnitude longitudinal wheel slips. It is desirable to maintain vehicle operation in the linear regions 310, 260 where the obtainable longitudinal force in response to an applied acceleration or brake command is easier to predict, and where enough lateral tyre force can be generated if needed. To ensure operation in this region, a wheel slip limit $\lambda_{LIM}$ on the order of, e.g., 0.1 in magnitude, can be imposed on a given wheel, which ensures operation in the linear region.

By the techniques discussed herein, such as the integrated wheel slip sensor 600, the actuators can be controlled at high bandwidth to always operate in the linear regions during actuation, which is an advantage. This bounding of the actuator operation can be performed locally, such that the central controller can always assume operation in the linear regions, which is an advantage.

A peak force 330, 380 is obtained for some ideal wheel slip value. To generate maximum traction or braking tyre force, it is desired to control the actuators to operate close to this peak force. Towards this end, it is important to obtain an accurate and reliable estimate of the vehicle speed over ground. From the example relationships 300, 350, and on the definition of wheel slip given above, it is appreciated that estimation errors in vehicle speed over ground may lead to undesired consequences. If the radar systems discussed in, e.g., EP1739451 A1 are used and a foreign object appears on the road surface with a significant velocity relative to the road surface, such as snow or water spray in strong wind, then a large error in the determined vehicle speed over ground may result. For instance, suppose that the vehicle 100 is travelling up a steep hill where water is flowing down past the road surface due to heavy rain, then the vehicle speed over ground may be significantly overestimated. Vehicle speed over ground may also be affected by gravel and other loose matter which can move relative to the road surface as the vehicle traverses over the surface.

A further problem with radar transceivers that determine vehicle speed over ground from reflections at the road surface is that the road surface may be very smooth, and not giving rise to much scattered energy which return to the radar transceiver as a radar echo.

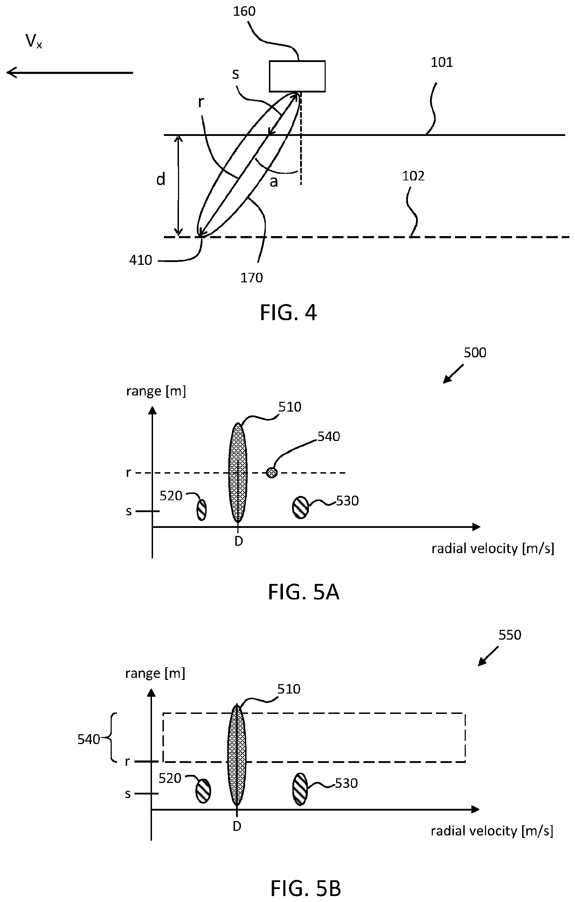

Figure 4 illustrates a ground-penetrating radar transceiver 160 which can be used to determine vehicle speed over ground regardless of the surface conditions, i.e., regardless of whether the road surface is smooth or scattering radar signals, and regardless of whether there is reflective matter on the road surface which moves relative to the road surface. The reason is that the radar transceiver has a main transmission lobe 170 which penetrates the road surface 101 and extends beyond the road surface. Thus, there are radar reflections generated also from points below the actual road surface, such as in the plane 102 which lies a distance d below the road surface 101. In the example of Figure 4, the main transmission lobe 170 intersects the plane 102 at range r, while the road surface 101 is at a distance s (smaller than r) from the radar transceiver 160 along the direction of the main transmission lobe 170. The reflections from this point 410 below the surface can normally be guaranteed to be stable and to provide a good foundation for establishing the vehicle speed over ground, regardless of any moving matter at the road surface 101.

According to some aspects, the plane 102 is a road foundation layer which is associated with relatively strong scattering. The actual distance r at which the speed over ground is determined is not so important, as long as it is below the surface 101, away from the matter which may be moving there and cause errors in the determination of the speed over ground.

The radar transceiver 160 is advantageously configured with a boresight direction of the main transmission lobe 170 in the longitudinal direction of the vehicle that intersects the road surface 101 at an angle *a,* as shown in Figure 4. This angle *a* may vary from implementation to implementation, but a value between 30-70 degrees has been found to give satisfactory results, and preferably about 45 degrees. It is noted that the radar transceiver 160 will detect relative velocity in its radial direction only, and not see the tangential component of the relative velocity between radar transceiver and a detected target. Thus, depending on the angle *a*, a compensation is necessary:

$$v_x = D \cos(90 - a)$$

where D is the radial velocity determined from the Doppler frequency of the target point under the road surface. The radar signal processing involved in determining relative speed from received radar reflections is generally known and will not be discussed in more detail herein. The techniques described in, e.g., EP1739451 A1 can be applied with advantage to determine D.

The radar transceiver 160 is preferably configured with a main transmission lobe azimuth angular width below ten degrees, and preferably below five degrees, i.e., a relatively narrow beam. This narrow beam decreases the amount of reflections received from the ambient environment and from the vehicle itself, and therefore simplifies detecting the Doppler frequency associated with the point 410 under the road surface 101. To further suppress clutter from the ambient environment, the radar transceiver 160 can be configured to detect the Doppler frequency associated with the target point 410 also based on an angle of arrival of a received radar signal. Detecting angle of arrival can be perform using an antenna array in a known manner.

The radar transceiver 160 may be a frequency modulated continuous wave (FMCW) radar transceiver. This type of radar signal permits an efficient processing based on fast Fourier transforms to determine a Doppler frequency associated with detections at a given distance, such as the distance r to the point under the road surface. By performing a range-Doppler processing operation, possibly complemented also by angle-of-arrival processing over an antenna array of the ground-penetrating radar transceiver 160, the Doppler shift of a given point at a distance under the road surface 101 can be determined in a reliable manner. This way of determining the speed over ground of a heavy-duty vehicle, such as the vehicle 100, is both dependable and accurate.

The carrier frequency of the radar transceiver 160 is preferably in the GHz range, such as above 30 GHz and preferably around 80 GHz or so. The reason for preferring this high carrier frequency is the small wavelength which allows scattering even from relatively smooth surfaces and/or homogenous materials.

Figure 5 schematically illustrates an example range-Doppler map 500 of a received radar signal. Range-Doppler maps are generally known to visualize received radar echoes based on the range to the target and the radial velocity of the target relative to the radar transceiver (determined from the Doppler shift on the received signal relative to the transmitted signal in a known manner). A range-Doppler map allows a receiver to separate radar detections which are at different ranges from the radar transceiver and/or are moving with different radial velocities relative to the radar transceiver. To determine the radial motion velocity of the point 410 relative to the radar transceiver 160, a control unit only has to read out the Doppler frequency at the specified range r. Due to the azimuth width and the direction of the main transmission lobe 170, the reflections from the point 410 will normally dominate over other weaker reflections, at least if averaged over some short period of time.

Figure 5A illustrates a common situation where there are several detections 510, 520, 530 at ranges close to the road surface, i.e., around the range s. Hence, it is difficult to know which of the detections that indicate the true vehicle speed over ground. However, all detections 510 in the main transmission lobe 170 at ranges around the range r, corresponding to the point 410 under the road surface, is normally free from clutter. To find the speed over ground, the strongest detection at some range r greater than the range s is first found. The Doppler frequency (or, equivalently, the radial relative velocity D) associated with this detection is then used to determine the speed over ground of the vehicle. If there is more than one Doppler frequency bin with non-negligible detection energy, i.e., more than one radar detection 510, 540 at the specified range r, then a weighted sum can be formed to estimate the radial velocity. The weights can be determined based on the energy in each Doppler frequency bin. The strongest detection at the specified range r can also be selected, since it is most likely that the strongest detection corresponds to the desired radial velocity.

The range r at which the Doppler value is determined can advantageously be determined relative to the road surface, say about 10 cm beyond the range to the road surface, i.e., according to some aspects

$$r = s + \Delta \; [\mathrm{m}]$$

where $\Delta$ is the positive offset value added to s to obtain r. This means that the actual range r changes continuously to follow, e.g., motion of the vehicle along a normal vector to the road surface, but stays more or less at the same distance relative to the road surface 101. The road surface at distance s is often visible as a strong reflection, although the Doppler content at this range s may comprise more than one component due to clutter as discussed above. Thus, according to some aspects, the radar transceiver 160 may first detect the distance s from the radar transceiver 160 to the road surface along the pointing direction of the main transmission lobe 170 and then determine the distance r to the point of interest below the road surface 101 relative to the road surface distance s, e.g., by adding a predetermined positive offset $\Delta$ to the detected distance s as discussed above. According to other aspects, the radar transceiver 160 may just determine the distance d below the road surface 101 as a predetermined distance from the radar transceiver 160. In this case any suitable distance r may be selected as long as it is larger than the distance s.

To improve accuracy further, the radar transceiver 160 may be configured to receive data indicative of a vehicle height over ground, or a height over ground of the radar transceiver 160. This type of data may, e.g., be obtained from a linear position sensor configured in connection to the vehicle suspension, such as a suspension system sensor. Thus, as the vehicle moves up and down along a normal to the road surface, the detected Doppler frequency can be adjusted to account for the motion, which improves the estimated speed over ground in the longitudinal direction.

Figure 5B illustrates another example range-Doppler map 550. In this case the radar transceiver 160 detects the Doppler frequency associated with the target point as an average Doppler frequency associated with a range of distances corresponding to a volume below the road surface. Alternatively, the radar transceiver 160 may perform a weighted combination of the strongest detections in the range 540 to determine the Doppler frequency from which vehicle speed over ground is determined, where the weights can be configured as a function of detection strength.

Figure 6 illustrates a particularly advantageous implementation of the herein described techniques. The ground-penetrating radar transceiver 160 in this example has been integrated with a wheel speed sensor 270, such as a Hall effect sensor, and processing circuitry to form a stand-alone wheel slip sensor 600. The wheel slip sensor 600 is configured with wheel radius data, and is able to process the signals from the radar transceiver 160 and from the wheel speed sensor 270 into an estimate of wheel slip. This wheel slip value can then be sent directly to an ECU 130, such as an ECU executing the VMM function 260. The wheel slip data can also be sent directly to one or more MSD controllers 240. The wheel slip sensor 600 can be integrated with an MSD controller 240 which then becomes able to control wheel slip of one or more wheels in a standalone manner without being informed continuously of the vehicle speed over ground in the coordinate system of the wheel. The radar transceiver can be configured with a narrow main transmission lobe 170 which can be directed past other vehicle components in vicinity of the wheel and towards the ground. The wheel slip sensor 600 may furthermore comprise an integrated wheel angle sensor, which allows the processing circuitry of the wheel slip sensor to translate a speed over ground obtained in a coordinate system of the vehicle 100 into a speed over ground value in the coordinate system of the wheel 210, which accounts for the current wheel angle relative to the vehicle longitudinal direction, such as an applied steering angle. This conversion can of course also be made by the VMM function 260, or at the MSD controller 240.

Figure 7 is a flow chart which summarizes the main points of the herein disclosed techniques. There is illustrated a method for determining speed over ground $v_x$ of a heavy-duty vehicle 100. The method comprises configuring S1 a ground-penetrating radar transceiver 160 with a main transmission lobe 170, detecting S2 a Doppler frequency associated with a target point at a distance d below a road surface 101, and determining S3 the speed over ground $v_x$ of the heavy-duty vehicle 100 based on the detected Doppler frequency.

According to aspects, the method comprises configuring S11 a boresight direction of the main transmission lobe 170 at an angle a relative to the road surface 101.

According to aspects, the method comprises configuring S12 the radar transceiver as an FMCW radar transceiver.

According to aspects, the method comprises configuring S13 the radar transceiver with a main transmission lobe azimuth angular width below ten degrees, and preferably below five degrees.

According to aspects, the method comprises detecting S21 a distance s from the radar transceiver 160 to the road surface 101 and determining the distance r to the point below the road surface 101 relative to the road surface distance s.

According to aspects, the method comprises determining S22 the distance d below the road surface 101 as a pre-determined distance from the radar transceiver 160.

According to aspects, the method comprises compensating S221 the pre-determined distance from the radar transceiver 160 based on a current height over ground of the vehicle 100. The current height over ground is optionally obtained from a suspension system sensor of the vehicle 100.

According to aspects, the method comprises detecting S23 the Doppler frequency associated with the target point also based on an angle of arrival of a received radar signal.

According to aspects, the method comprises detecting S24 the Doppler frequency associated with the target point as an average Doppler frequency associated with a range of distances corresponding to a volume below the road surface 101. The average Doppler frequency is advantageously determined as a weighted average, where the weights are configured as function of radar detection strength.

Figure 8 schematically illustrates, in terms of a number of functional units, the components of a control unit 800 according to embodiments of the discussions herein, such as any of the VUCs 130, 140 or a control unit comprised in the ground-penetrating radar transceiver 160. Processing circuitry 810 is provided using any combination of one or more of a suitable central processing unit CPU, multiprocessor, microcontroller, digital signal processor DSP, etc., capable of executing software instructions stored in a computer program product, e.g. in the form of a storage medium 830. The processing circuitry 810 may further be provided as at least one application specific integrated circuit ASIC, or field programmable gate array FPGA.

Particularly, the processing circuitry 810 is configured to cause the control unit 800 to perform a set of operations, or steps, such as the methods discussed in connection to Figure 7. For example, the storage medium 830 may store the set of operations, and the processing circuitry 810 may be configured to retrieve the set of operations from the storage medium 830 to cause the control unit 800 to perform the set of operations. The set of operations may be provided as a set of executable instructions. Thus, the processing circuitry 810 is thereby arranged to execute methods as herein disclosed.

The storage medium 830 may also comprise persistent storage, which, for example, can be any single one or combination of magnetic memory, optical memory, solid state memory or even remotely mounted memory.

The control unit 800 may further comprise an interface 820 for communications with at least one external device. As such the interface 820 may comprise one or more transmitters and receivers, comprising analogue and digital components and a suitable number of ports for wireline or wireless communication.

The processing circuitry 810 controls the general operation of the control unit 800, e.g., by sending data and control signals to the interface 820 and the storage medium 830, by receiving data and reports from the interface 820, and by retrieving data and instructions from the storage medium 830. Other components, as well as the related functionality, of the control node are omitted in order not to obscure the concepts presented herein.

Figure 9 illustrates a computer readable medium 910 carrying a computer program comprising program code means 920 for performing the methods illustrated in Figure 7, when said program product is run on a computer. The computer readable medium and the code means may together form a computer program product 900.

**Claims**

1. A method for determining speed over ground ($v_x$) of a heavy-duty vehicle (100), the method comprising

   configuring (S1) a ground-penetrating radar transceiver (160) with a main transmission lobe (170) in a longitudinal direction of the heavy-duty vehicle (100),
   detecting (S2) a Doppler frequency associated with a target point at a distance (d) below a road surface (101), and
   determining (S3) the speed over ground ($v_x$) of the heavy-duty vehicle (100) based on the detected Doppler frequency.

2. The method according to claim 1, comprising configuring (S11) a boresight direction of the main transmission lobe (170) at an angle (a) relative to the road surface (101).

3. The method according to any previous claim, comprising configuring (S12) the radar transceiver as a frequency modulated continuous wave, FMCW, radar transceiver.

4. The method according to any previous claim, comprising configuring (S13) the radar transceiver with a main transmission lobe azimuth angular width below ten degrees, and preferably below five degrees.

5. The method according to any previous claim, comprising detecting (S21) a distance (s) from the radar transceiver (160) to the road surface (101) and determining the distance (r) to the point below the road surface (101) relative to the road surface distance (s).

6. The method according to any of claims 1-4, comprising determining (S22) the distance (d) below the road surface (101) as a pre-determined distance from the radar transceiver (160).

7. The method according to claim 6, comprising compensating (S221) the pre-determined distance from the radar transceiver (160) based on a current height over ground of the vehicle (100).

8. The method according to claim 7, where the current height over ground is obtained from a suspension system sensor of the vehicle (100).

9. The method according to any previous claim, comprising detecting (S23) the Doppler frequency associated with the target point also based on an angle of arrival of a received radar signal.

10. The method according to any previous claim, comprising detecting (S24) the Doppler frequency associated with the target point as an average Doppler frequency associated with a range of distances corresponding to a volume below the road surface (101).

11. The method according to claim 10, where the average Doppler frequency is determined as a weighted average, where the weights are configured as function of radar detection strength.

12. A computer program (920) comprising program code means for performing the steps of any of claims 1-11 when said program is run on a computer or on processing circuitry (810) of a control unit (130, 140, 800).

13. A computer readable medium (910) carrying a computer program (920) comprising program code means for performing the steps of any of claims 1-11 when said program product is run on a computer or on processing circuitry (810) of a control unit (800, 130, 140).

14. A ground-penetrating radar transceiver (160) arranged to determine a speed over ground ($v_x$) of a heavy-duty vehicle (100),

>the radar transceiver (160) being configured with a main transmission lobe (170),
>the radar transceiver (160) comprising processing circuitry arranged to detect a Doppler frequency associated with a target point at a distance (d) below a road surface (101), and to determine the speed over ground ($v_x$) of the heavy-duty vehicle (100) based on the detected Doppler frequency.

15. An integrated wheel slip sensor (600) comprising a wheel speed sensor arranged to determine a rotation velocity of a wheel (210) on the vehicle (100) and a ground-penetrating radar transceiver (160) according to claim 14.

16. The integrated wheel slip sensor (600) according to claim 15, arranged to obtain a wheel angle of the wheel (210) relative to a longitudinal direction of the vehicle (100), and to convert a speed over ground determined in a coordinate system of the vehicle (100) into a speed over ground in a coordinate system of the wheel (210).

17. A vehicle (100) comprising a ground-penetrating radar transceiver (160) according to claim 14 and/or a wheel slip sensor according to claim 15 or 16.

**Patentansprüche**

1. Verfahren zum Bestimmen einer oberirdischen Geschwindigkeit ($v_x$) eines Schwerlastfahrzeugs (100), das Verfahren umfassend

>Konfigurieren (S1) eines Bodenradar-Sendeempfängers (160) mit einer Hauptsendekeule (170) in einer Längsrichtung des Schwerlastfahrzeugs (100),
>Erfassen (S2) einer Dopplerfrequenz, die mit einem Zielpunkt in einem Abstand (d) unter einer Straßenoberfläche (101) assoziiert ist, und Bestimmen (S3) der oberirdischen Geschwindigkeit ($v_x$) des Schwerlastfahrzeugs (100) basierend auf der erfassten Dopplerfrequenz.

2. Verfahren nach Anspruch 1, umfassend ein Konfigurieren (S11) einer Mittellinienrichtung der Hauptsendekeule (170) in einem Winkel ($\alpha$) in Bezug auf die Straßenoberfläche (101).

3. Verfahren nach einem der vorherigen Ansprüche, umfassend ein Konfigurieren (S12) des Radar-Sendeempfängers als frequenzmodulierter Dauerstrich-Radar-Sendeempfänger (FMCW).

**4.** Verfahren nach einem der vorherigen Ansprüche, umfassend ein Konfigurieren (S13) des Radar-Sendeempfängers mit einer azimutalen Breite der Hauptsendekeule von weniger als zehn Grad, vorzugsweise weniger als fünf Grad.

**5.** Verfahren nach einem der vorherigen Ansprüche, umfassend ein Erfassen (S21) eines Abstands (s) zwischen dem Radar-Sendeempfänger (160) und der Straßenoberfläche (101) und Bestimmen des Abstands (r) zu dem Punkt unterhalb der Straßenoberfläche (101) in Bezug auf den Straßenoberflächenabstand (s).

**6.** Verfahren nach einem der Ansprüche 1-4, umfassend ein Bestimmen (S22) des Abstands (d) unter der Straßenoberfläche (101) als eine vorbestimmte Entfernung von dem Radar-Sendeempfänger (160).

**7.** Verfahren nach Anspruch 6, umfassend ein Kompensieren (S221) des vorbestimmten Abstands von dem Radar-Sendeempfänger (160) basierend auf einer aktuellen Höhe über dem Boden des Fahrzeugs (100).

**8.** Verfahren nach Anspruch 7, wobei die aktuelle Höhe über dem Boden von einem Aufhängungssystemsensor des Fahrzeugs (100) erlangt wird.

**9.** Verfahren nach einem der vorherigen Ansprüche, umfassend ein Erfassen (S23) der Dopplerfrequenz, die mit einem Zielpunkt assoziiert ist, auch basierend auf einem Ankunftswinkel eines empfangenen Radarsignals.

**10.** Verfahren nach einem der vorherigen Ansprüche, umfassend ein Erfassen (S24) der Dopplerfrequenz, die mit einem Zielpunkt assoziiert ist, als durchschnittliche Dopplerfrequenz, die mit einem Bereich von Abständen assoziiert ist, der einem Volumen unterhalb der Straßenoberfläche (101) entspricht.

**11.** Verfahren nach Anspruch 10, wobei die durchschnittliche Dopplerfrequenz als gewichteter Mittelwert bestimmt wird, wobei die Gewichte als Funktion der Radarerfassungsstärke konfiguriert sind.

**12.** Computerprogramm (920), umfassend Programmcodeeinrichtungen zum Durchführen der Schritte nach einem der Ansprüche 1-11, wenn das Programm auf einem Computer oder auf einer Verarbeitungsschaltung (810) einer Steuereinheit (130, 140, 800) ausgeführt wird.

**13.** Computerlesbares Medium (910), das ein Computerprogramm (920) trägt, umfassend Programmcodeeinrichtungen zum Durchführen der Schritte nach einem der Ansprüche 1-11, wenn das Programmprodukt auf einem Computer oder auf einer Verarbeitungsschaltung (810) einer Steuereinheit (800, 130, 140) ausgeführt wird.

**14.** Bodenradar-Sendeempfänger (160), der angeordnet ist, um eine oberirdische Geschwindigkeit ($v_x$) eines Schwerlastfahrzeugs (100) zu bestimmen,

der Radar-Sendeempfänger (160) mit einer Hauptsendekeule (170) konfiguriert ist, der Radar-Sendeempfänger (160) eine Verarbeitungsschaltung umfasst, die angeordnet ist, um eine Dopplerfrequenz zu erfassen, die mit einem Zielpunkt in einem Abstand (d) unter einer Straßenoberfläche (101) assoziiert ist, und die oberirdische Geschwindigkeit ($v_x$) des Schwerlastfahrzeugs (100) basierend auf der erfassten Dopplerfrequenz zu bestimmen.

**15.** Integrierter Radschlupfsensor (600), umfassend einen Raddrehzahlsensor, der angeordnet ist, um die Drehgeschwindigkeit eines Rads (210) an dem Fahrzeug (100) zu bestimmen, und einen Bodenradar-Sendeempfänger (160) nach Anspruch 14.

**16.** Integrierter Radschlupfsensor (600) nach Anspruch 15, der angeordnet ist, um einen Radwinkel des Rads (210) in Bezug auf eine Längsrichtung des Fahrzeugs (100) zu erlangen und eine in einem Koordinatensystem des Fahrzeugs (100) bestimmte oberirdische Geschwindigkeit in eine oberirdische Geschwindigkeit in einem Koordinatensystem des Rads (210) umzuwandeln.

**17.** Fahrzeug (100), umfassend einen Bodenradar-Sendeempfänger (160) nach Anspruch 14 und/oder einen Radschlupfsensor nach Anspruch 15 oder 16.

**Revendications**

**1.** Procédé de détermination de la vitesse au sol ($v_x$) d'un véhicule utilitaire lourd (100), le procédé comprenant

la configuration (S1) d'un émetteur-récepteur de radar à pénétration de sol (160) avec un lobe d'émission principal (170) dans une direction longitudinale du véhicule utilitaire lourd (100), la détection (S2) d'une fréquence Doppler associée à un point cible à une distance (d) sous la surface d'une route (101), et la détermination (S3) de la vitesse au sol ($v_x$) du véhicule utilitaire lourd (100) sur la base de la fréquence Doppler détectée.

**2.** Procédé selon la revendication 1, comprenant la configuration (S11) d'une direction de ligne de visée du lobe d'émission principal (170) à un angle (α) par rapport à la surface de la route (101).

3. Procédé selon l'une quelconque des revendications précédentes, comprenant la configuration (S12) de l'émetteur-récepteur radar en tant qu'émetteur-récepteur radar à ondes continues modulées en fréquence (FMCW).

4. Procédé selon l'une quelconque des revendications précédentes, comprenant la configuration (S13) de l'émetteur-récepteur radar avec une largeur angulaire en azimut du lobe d'émission principal inférieure à dix degrés, et de préférence inférieure à cinq degrés.

5. Procédé selon l'une quelconque des revendications précédentes, comprenant la détection (S21) d'une distance (s) entre l'émetteur-récepteur radar (160) et la surface de la route (101) et la détermination de la distance (r) du point situé sous la surface de la route (101) par rapport à la distance (s) de la surface de la route.

6. Procédé selon l'une quelconque des revendications 1 à 4, comprenant la détermination (S22) de la distance (d) sous la surface de la route (101) en tant que distance prédéterminée de l'émetteur-récepteur radar (160).

7. Procédé selon la revendication 6, comprenant la compensation (S221) de la distance prédéterminée de l'émetteur-récepteur radar (160) sur la base d'une hauteur actuelle au-dessus du sol du véhicule (100).

8. Procédé selon la revendication 7, dans lequel la hauteur actuelle au-dessus du sol est obtenue à partir d'un capteur du système de suspension du véhicule (100).

9. Procédé selon l'une quelconque des revendications précédentes, comprenant la détection (S23) de la fréquence Doppler associée au point cible également en fonction d'un angle d'arrivée d'un signal radar reçu.

10. Procédé selon l'une quelconque des revendications précédentes, comprenant la détection (S24) de la fréquence Doppler associée au point cible en tant que fréquence Doppler moyenne associée à une plage de distances correspondant à un volume sous la surface de la route (101).

11. Procédé selon la revendication 10, où la fréquence Doppler moyenne est déterminée comme une moyenne pondérée, où les poids sont configurés en fonction de la puissance de détection du radar.

12. Programme informatique (920) comprenant des moyens de code de programme pour exécuter les étapes selon l'une quelconque des revendications 1 à 11 lorsque ledit programme est exécuté sur un ordinateur ou sur un circuit de traitement (810) d'une unité de commande (130, 140, 800).

13. Support lisible par ordinateur (910) contenant un programme informatique (920) comprenant des moyens de code de programme pour exécuter les étapes selon l'une quelconque des revendications 1 à 11 lorsque ledit produit de programme est exécuté sur un ordinateur ou sur un circuit de traitement (810) d'une unité de commande (800, 130, 140).

14. Émetteur-récepteur de radar à pénétration de sol (160) agencé pour déterminer une vitesse au sol ($v_x$) d'un véhicule utilitaire lourd (100),

l'émetteur-récepteur radar (160) étant configuré avec un lobe d'émission principal (170), l'émetteur-récepteur radar (160) comprend un circuit de traitement agencé pour détecter une fréquence Doppler associée à un point cible à une distance (d) sous la surface d'une route (101), et pour déterminer la vitesse au sol ($v_x$) *du* véhicule utilitaire lourd (100) sur la base de la fréquence Doppler détectée.

15. Capteur de patinage de roue intégré (600) comprenant un capteur de vitesse de roue agencé pour déterminer la vitesse de rotation d'une roue (210) sur le véhicule (100) et un émetteur-récepteur de radar à pénétration de sol (160) selon la revendication 14.

16. Capteur de patinage de roue intégré (600) selon la revendication 15, agencé pour obtenir un angle de roue de la roue (210) par rapport à une direction longitudinale du véhicule (100), et pour convertir une vitesse au sol déterminée dans un système de coordonnées du véhicule (100) en une vitesse au sol dans un système de coordonnées de la roue (210).

17. Véhicule (100) comprenant un émetteur-récepteur de radar à pénétration de sol (160) selon la revendication 14 et/ou un capteur de patinage de roue selon la revendication 15 ou 16.

FIG. 1

FIG. 2

300

310    320

$F_x \leq \mu F_z$

Fx

330

propulsion

Fy

Tyre force Fx (kN)

0    $\lambda_{LIM+}$ 0.2    0.4    0.6    0.8    1.0

Longitudinal wheel slip ratio (-)

## FIG. 3A

350

Longitudinal wheel slip ratio (-)    $\lambda_{LIM-}$

-1.0    -0.8    -0.6    -0.4    -0.2    0

Fy

braking

Fx

380

$F_x \geq -\mu F_z$

Tyre force Fx (kN)

370    360

## FIG. 3B

FIG. 4

FIG. 5A

FIG. 5B

FIG. 6

FIG. 7

FIG. 8

FIG. 9

**EP 4 460 714 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1739451 A1
- US 4366546 A
- WO 2019145272 A1
- US 2014121964 A1
- US 2005116854 A1
- US 2020191938 A1
- US 2015005993 A1